# EUROPÄISCHE PATENTSCHRIFT

(11) **EP 0 309 677 B1**
(45) Veröffentlichungstag und Bekanntmachung des Hinweises auf die Patenterteilung: **15.12.1993**
(21) Anmeldenummer: 88112078.6
(22) Anmeldetag: 27.07.1988
(51) Int. Cl.: G02B 6/38

(54) **Verbindungselement für Lichtwellenleiter**
Connection element for light guides
Elément de connexion pour guides d'ondes lumineuses

(30) Priorität: 30.09.1987 DE 3733469; 23.01.1988 DE 3802240
(43) Veröffentlichungstag der Anmeldung: 05.04.1989
(73) Patentinhaber: KRONE Aktiengesellschaft, D-14167 Berlin (DE)
(72) Erfinder: Walker, Robert, Padstow N.S.W. 2211 (AU); Fitzgerald, Robert, Bateau Bay N.W.S. 2261 (AU); Bippus, Hans-Dieter, Holate, N.S.W. 2250 (AU)

(56) Entgegenhaltungen:
- EP-A- 0 232 754
- WO-A-80/00619
- DE-A- 2 842 012
- DE-A- 3 320 121
- GB-A- 1 520 679
- US-A- 4 146 301
- US-A- 4 148 559

## Beschreibung

Die Erfindung bezieht sich auf eine Verbindungslement für Lichtwellenleiter (LWL), insbesondere Glasfasern, aus einer Tragschale und aus einer mit dieser verbindbaren Deckschale und mit einem Führungskanal für die Lichtwellenleiter.

Die DE-A-15 20 679 offenbart ein Verbindungselement zur Verbindung von zwei Lichtwellenleitern, die unterschiedliche Durchmesser besitzen. Beide Lichtwellenleiter werden in eine Tragschale eingelegt, die hierzu eine V-förmige Längsnut aufweist. Zur Verbindung der beiden Lichtwellenleiter und zur Fixierung der Lichtwellenleiter in der Aufnahmenut wird jeweils für jeden Lichtwellenleiter eine U-förmige federnde Metallklammer aufgerastet. Nachteilig bei dieser Anordnung ist, daß die U-förmige Metallklammer beim Aufrasten eine "Schlagkraft" auf den Lichtwellenleiter ausübt, wodurch dieser an seiner äußeren Mantelfläche beschädigt werden kann. Diese "Schlagkraft" kommt dadurch zustande, daß die Tragschale schräge Seitenwände aufweist, an denen die nach innen gerichteten unteren Stege der U-förmigen Klammer anliegen. Beim Aufrasten der U-förmigen Klammer wird somit die obere, den Lichtwellenleiter in die V-förmige Nut drückende Seite der U-förmigen Klammer durchgebogen. Erst nach dem Hintergreifen der unteren nach innen gerichteten Stege kommt es zur Anlage zwischen dem Lichtwellenleiter und der U-förmigen Klammer, wobei die U-förmige Klammer mit einem Schlag, aufgrund des Schnappeffektes, die Lichtwellenleiter in die V-förmige Nut drückt. Ein weiterer Nachteil besteht darin, daß das Einbringen der beiden Lichtwellenleiter in die Aufnahmenut und das konzentrische Aneinanderreihen der stirnseitigen Flächen der Lichtwellenwellenleiter im Mittelbereich des Verbindungselementes nicht gewährleistet ist, da zwei voneinander unabhängig wirkende Klammern verwendet werden. Es besteht auch die Gefahr, daß sich die beiden Lichtwellenleiter auseinanderschieben, da zwei Klammern verwendet werden.

Ein weiteres Verbindungselement ist aus dem DE-GM 75 17 996 vorbekannt. Bei diesem ist der Führungskanal in der Tragschale ausgebildet. In den Führungskanal werden die Enden der zu verbindenden Lichtwellenleiter eingelegt und verklebt. Anschließend wird die Deckschale aufgesetzt, wobei die im Stoßstellenbereich lose im Führungskanal der Tragschale befindlichen Lichtwellenleiter in den Führungskanal eingedrückt und ausgerichtet sowie zentriert werden. Gleichzeitig werden Trag- und Deckschale miteinander verklebt. Zur zusätzlichen Sicherung wird entweder ein Schlauch aus wärmeschrumpfbarem Material über die verbundenen Trag- und Deckschalen gezogen, oder es wird eine Federspange aufgeklemmt. Nachtelig hierbei ist, daß die Lichtwellenleiter beim Einlegen in den Führungskanal der Tragschale leicht beschädigt werden können und bis zum Schließen des Verbindungselementes mittels der Deckschale gehalten werden müssen. Ferner ist die Montage des regelmäßig aus drei Teilen, nämlich der Tragschale, der Deckschale und dem Schlauch bzw. der Federspange, bestehenden Verbindungslementes für Lichtwellenleiter relativ aufwendig.

Es ist darüber hinaus aus dem DE-Patent 32 25 657 ein gattungsfremdes Verbindungselement vorbekannt, das aus einem gekrümmten Stab mit einer dreieckig profilierten Bohrung besteht. Hierbei treten die zum eingangs genannten Stand der Technik geschilderten Nachteile nicht auf. Jedoch ist die Ausbildung der dreieckig profilierten Bohrung in Längsrichtung des gekrümmten Stabes äußerst schwierig und teuer in der Herstellung.

Der Erfindung liegt von daher die Aufgabe zugrunde, ein Verbindungselement der gattungsgemäßen Art zu schaffen, das einerseits einfach und preiswert in der Herstellung ist und bei dem andererseits die Montage und das Einbringen der Lichtwellenleiter vereinfacht sind.

Die Lösung dieser Aufgabe ergibt sich aus den kennzeichnenden Merkmalen des Anspruches 1 und dem nebengeordneten Anspruch 4. Durch die erfindungsgemäße Ausbildung des Verbindungselementes aus zwei miteinander verrastbaren Schalen, nämlich der Deckschale mit einer durchgehenden Längsnut zur Aufnahme der Tragschale und den federnden Seitenstegen an den freien Längskanten der Längsnut der Deckschale zum Einrasten der Seitenstege hinter der in die Längsnut eingedrückten Tragschale, wird in technisch einfacher Weise ein Verbindungselement geschaffen, das nach dem Einrasten von Trag- und Deckschale ein einstückiges Verbindungselement entsprechend dem Verbindungselement nach DE 32 25 657 darstellt. In demgegenüber vereinfachter Form kann der Führungskanal für die Lichtwellenleiter jedoch im Bereich der aneinander gedrückten Innenflächen von Trag- und Deckschale in Form von in diese eingebrachten Führungsnuten gebildet werden, welche im Gegensatz zur durchgehenden dreieckig profilierten Bohrung gemäß DE 32 25 657 als längsverlaufende Führungsnuten in Trag- und Deckschale eingebracht werden können. Das erfindungsgemäße Verbindungselement besteht somit aus nur zwei verrastbaren Teilen, nämlich der Tragschale und der Deckschale. Beim Einbringen der Lichtwellenleiter in den Führungskanal des verrasteten Verbindungselementes besteht nicht die Gefahr, daß die Lichtwellenleiter beschädigt werden können. Außerdem ist die Montage des Verbidungselementes einerseits und der Lichtwellenleiterverbindung innerhalb des Verbindungselementes andererseits äußerst einfach.

Ein besonderer Vorteil der erfindungsgemäßen Ausbildung des Verbindungselementes aus Trag- und Deckschale besteht darin, daß die in die Innenflächen von Trag- und Deckschale eingebrachten Führungsnuten für die Lichtwellenleiter mit einem Metall, insbesondere mit Chrom, beschichtet sein können, so daß die in den Führungskanal des aus Trag- und Deckschale verrasteten Verbindungselementes eingeführten Lichtwellenleiter mit ihren scharfen Kanten das Kunststoffmaterial von Trag- und Deckschale nicht mehr beschädigen können.

In besonders bevorzugter Weise läuft der Führungskanal für die Lichtwellenleiter im Längsmittelbereich des Verbindungselementes gerade und in beiden Endbereichen kurvenförmig. Hierdurch erfolgt eine besonders günstige Führung der Lichtwellenleiter zum gerade verlaufenden Längsmittelbereich, in welchem die freien Stirnseiten der Lichtwellenleiter stumpf aufeinander stoßen.

Es ist ferner aus dem Firmenprospekt "Lightlinker, Fiber Optic Splice System" ein Verbindungselement vorbekannt, bei welchem eine den Führungskanal bildende Führungshülse aus vier, im Querschnitt runden Glasstäbchen vorgesehen ist, die miteinander verbunden sind und zwischen sich einen sternförmigen Führungskanal für die von beiden Seiten einzuführenden Enden zweier Lichtwellenleiter bilden. In Längsrichtung sind die Glasstäbchen und damit der Führungskanal unter einem stumpfen Winkel zueinander ausgerichtet, wobei sich in der Mitte des Führungskanales die von beiden Seiten eingeschobenen, rechtwinklig abgeschnittenen Stirnseiten der Lichtwellenleiter flächig und parallel zueinander gegenüberstehen. Die Führungshülse befindet sich in einem Träger aus einem länglichen, mit Nickel plattierten Kupferblech mit sechs Paaren gegenüberstehender Laschen, wobei die beiden mittleren Laschenpaare die Führungshülse und die jeweils vor und hinter dieser befindlichen Laschenpaare je einen aus Silikonkautschuk bestehenden Führungsschlauch für die Lichtwellenleiter aufnehmen. Die gesamte Anordnung aus Träger, Führungshülse und Führungsschläuchen wird nach der Montage der Lichtwellenleiter in ein metallisches Gehäuseröhrchen eingeschoben. Nachteilig ist auch hierbei die aufwendige Montage des Verbindungselementes. Hierzu müssen zunächst das Gehäuseröhrchen und ein Führungsschlauch auf das Ende des einen Lichtwellenleiters und der andere Führungsschlauch auf das Ende des anderen Lichtwellenleiters aufgeschoben werden. Anschließend müssen die Ende der Lichtwellenleiter in die Führungshülse eingeschoben und dort verklebt werden. Nach dem Trocknen der Klebung werden die beiden Führungshülsen in die Laschen des Trägers eingedrückt. Abschließend wird das Gehäuseröhrchen aus rostfreiem Stahl über die gesamte Anordnung geschoben. Neben einer aufwendigen Montage besteht dabei die Gefahr, daß die Lichtwellenleiter beim Montieren des Verbindungselementes brechen.

Um das erfindungsgemäße Verbindungslement auch mit einer Lichtwellenleiter-Führungshülse versehen zu können, um somit die Montage der Führungshülse im Träger zu erleichtern und die Gefahr des Bruches eines Lichtwellenleiters während der Montage zu vermeiden, sieht die Erfindung ferner gemäß Anspruch 4 vor, daß die Tragschale im Längsmittelbereich eine Aufnahmenut für die Lichtwellenleiter-Führungshülse und die Deckschale einen die Führungshülse in die Aufnahmenut drückenden Längssteg aufweisen. Bei dieser Ausführungsform des erfindungsgemäßen Verbingungselementes werden die freien, aneinanderstoßenden Enden der Lichtwellenleiter hier zunächst in die Führungshülse eingebracht und dort verklebt, während diese bereits in der Aufnahmenut der Tragschale aufgenommen ist. Nach Beendigung des Klebevorganges wird die Deckschale auf die Tragschale aufgerastet, woraufhin der gesamte Montagevorgang des Verbindungselementes bereits abgeschlossen ist. Ein umständliches, vorheriges Einfädeln der Enden der Lichtwellenleiter in Bauelemente des Trägers ist somit nicht mehr erforderlich.

Die Erfindung ist nachfolgend anhand von zwei in den Zeichnungen dargestellten Ausführungsformen eines Verbindungselementes für Lichtwellenleiter (LWL), insbesondere Glasfasern, näher erläutert. Es zeigen:
- Fig.1: Eine teilweise im Schnitt dargestellte Seitenansicht des Verbindungselementes in der ersten Ausführungsform,
- Fig. 2: eine teilweise im Schnitt dargestellte Draufsicht auf das Verbindungselement gemäß Fig. 1,
- Fig. 3: einen Querschnitt gemäß der Linie III-III in Fig. 1,
- Fig. 4: einen Querschnitt gemäß der Linie IV-IV in Fig. 1,
- Fig. 5: eine teilweise im Schnitt dargestellte Seitenansicht des Verbindungselementes in der zweiten Ausführungsform,
- Fig. 6: eine teilweise im Schnitt dargestellte Draufsicht auf das Verbindungselement gemäß Fig. 5,
- Fig. 7: einen Querschnitt gemäß der Linie VII-VII in Fig. 5,
- Fig. 8: einen Querschnitt gemäß der Linie VIII-VIII in Fig. 5,
- Fig. 9: eine Stirnansicht des Verbindungselementes und
- Fig. 10: eine Prinzipdarstellung einer Montageschiene für das Verbindungselement in der zweiten Ausführungsform.

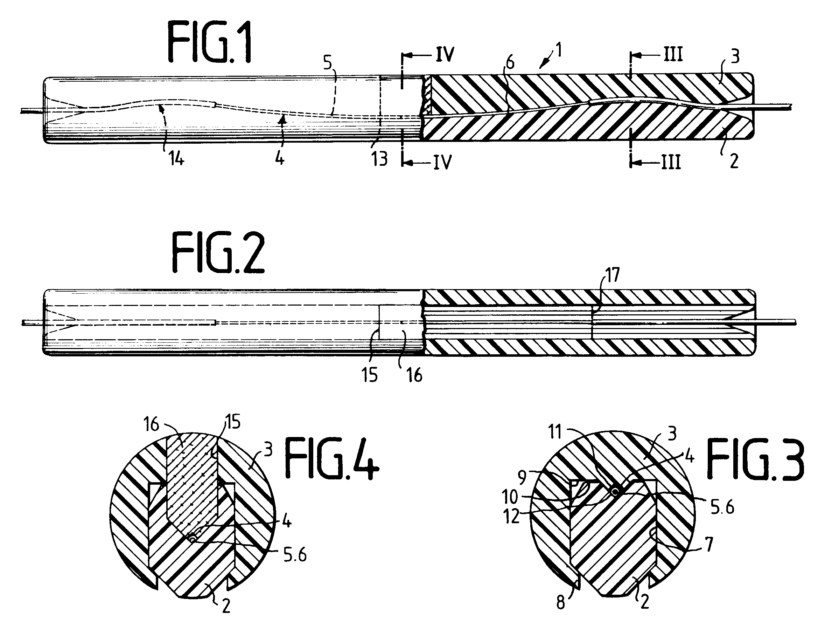

Das Verbindungselement 1 für Lichtwellenleiter (LWL) 5, 6, insbesondere Glasfasern, besteht aus einer Tragschale 2 und aus einer mit dieser verbindbaren Deckschale 3, welche gemeinsam einen Führungskanal 4 für die Lichtwellenleiter 5, 6 ausbilden. Trag- und Deckschale 2 bzw. 3 bestehen aus Kunststoff. Zum Verbinden von Trag- und Deckschale 2, 3 besitzt die Deckschale 3 eine durchgehende Längsnut 7 zur Aufnahme der Tragschale 2, wie es insbesondere in Fig. 3 dargestellt ist. Dabei liegen die äußeren Seitenwände der im Querschnitt im wesentlichen rechteckigen Tragschale 2 plan an den inneren Seitenwänden der Längsnut 7 der Deckschale 3 an. Ferner sind an den freien Längskanten der Längsnut 7 der Deckschale 3 federne Seitenstege 8 ausgebildet, die zum Einrasten hinter der in die Längsnut 7 eingedrückten Tragschale 2 dienen, wozu deren Seitenkanten abgeschrägt sind. Der Führungskanal 4 für die Lichtwellenleiter 5, 6 ist im Bereich der aneinander gedrückten Innenflächen 9, 10 von Deck- und Tragschale 3, 2 ausgebildet und besteht aus im Querschnitt dreieckförmigen Führungsnuten 11, 12.

Der aus den Führungsnuten 11, 12 gebildete Führungskanal 4 für die Lichtwellenleiter 5, 6 ist im Längsmittelbereich 13 des Verbindungselementes 1 im wesentlichen gerade bzw. achsial ausgebildet und verläuft zu beiden Endbereichen des Vebindungselementes 1 hin unter einem Krümmungsradius 14, so daß der Führungskanal 4 insgesamt in den Endbereichen des Verbindungselementes 1 kurvenförmig verläuft, wie es insbesondere in Fig. 1 dargestellt ist.

Da die Tragschale 2 und die Deckschale 3 aus Kunststoff bestehen, ist somit die Gefahr gegeben, daß die bei verrasteter Trag- und Deckschale 2, 3 in den Führungskanal 4 eingeschobenen Lichtwellenleiter 5, 6 mit ihren scharfen Kanten das Kunststoffmaterial von Trag- und Deckschale 2, 3 beschädigen. Um dies zu vermeiden, sind die den Führungskanal 4 bildenden Führungsnuten 11, 12 in Trag- und Deckschale 2, 3 mit einer Metallschicht, insbesondere einer Chromschicht, versehen, deren Härte größer ist als die Härte des Materials der Lichtwellenleiter 5, 6.

Im gerade ausgebildeten Längsmittelbereich 13 der Führungsnut 11 des Führungskanales 4 mündet eine Siegelungsöffnung 15, welche mittels eines Siegelungsstopfens 16 verschließbar ist, wie es in Fig. 4 dargestellt ist.

Nach der Herstellung der Tragschale 2 und der Deckschale 3 der voranstehend beschriebenen und in den Figuren 1 bis 4 dargestellten ersten Ausführungsform des Verbindungselementes 1 aus Kunststoff werden die jeweiligen Führungsnuten 11, 12 mit den Chromschichten versehen. Die derart ausgebildete Deckschale 3 wird dann auf die entsprechend ausgebildete Tragschale 2 aufgerastet, wobei die federnen Seitenstege 8 hinter die abgeschrägten Kanten der Tragschale 2 greifen, wie es in Fig. 3 dargestellt ist. Durch das Aneinanderliegen der Innenflächen 9, 10 von Trag- und Deckschale 2, 3 wird dann zwischen den Führungsnuten 11, 12 der Führungskanal 4 für die Lichtwellenleiter 5, 6 gebildet. Diese werden anschließend von beiden Seiten in das Verbindungselement eingeschoben und stoßen im gerade verlaufenden Längsmittelbereich 13 mit ihren planen Stirnflächen aneinander. Anschließend wird durch die Siegelungsöffnung 15 ein geeigneter Klebstoff eingebracht, welcher die aneinander stoßenden Enden der Lichtwellenleiter 5, 6 fest miteinander verbindet. Abschließend wird der Stopfen 16 zum Ver-schließen der Siegelungsöffnung 15 eingebracht und eingeklebt.

Wie es in Fig. 2 noch dargestellt ist, weisen die Führungsnuten 11, 12 von den freien Stirnseiten des Verbindungselementes 1 her bis etwa zur Linie 17 einen größeren Querschnitt auf, so daß die Lichtwellenleiter 5, 6 bis dorthin noch mit der Isolierung versehen sein können. Erst im Bereich zwischen den beiden Linien 17, d. h. in einem Teilbereich des kurvenförmigen Führungskanales 4 und im gerade verlaufenden Längsmittelbereich 13 des Führungskanales 4, bedarf es des vorherigen Abisolierens der Lichtwellenleiter 5, 6.

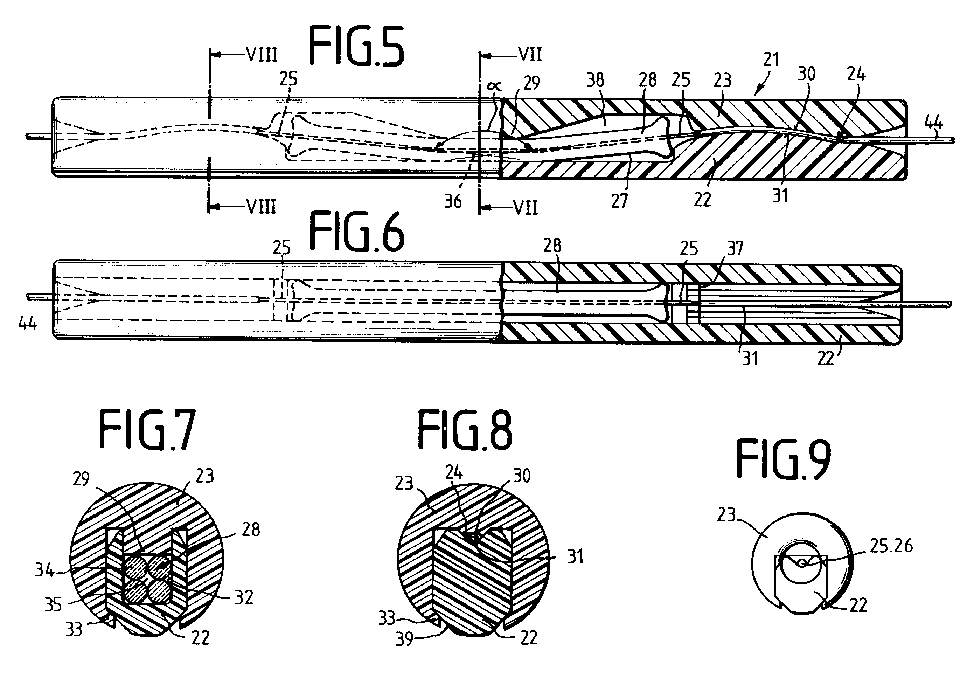

Das Verbindungselement 21 für Lichtwellenleiter, insbesondere Glasfasern, besteht in der in den Figuren 5 bis 10 dargestellten zweiten Ausführungsform aus einer Tragschale 22 und einer Deckschale 23, welche zwischen sich einen Führungskanal 24 für die Lichtwellenleiter 25, 26 bilden. Im Längsmittelbereich 36 weist die Tragschale 22 eine Aufnahmenut 27 für eine Lichtwellenleiter-Führungshülse 28 auf, die gemäß US-PS 4,506,946 ausgebildet sein kann (siehe auch den Firmenprospekt "Lightlinker, Fiber Optic Splice System"). Im Bereich der Aufnahmenut 27 besitzt die Deckschale 23 einen die Führungshülse 28 in der Aufnahmenut 27 haltenden Längssteg 29. Die Tragschale 22 und die Deckschale 23 weisen vor und hinter der Aufnahemnut 27 bzw. dem Längssteg 29 gegeneinander gerichtete Führungsnuten 30, 31 für die Lichtwellenleiter 25, 26 auf. Die Deckschale 23 besitzt einen kreisförmigen Querschnitt und ferner eine durchgehende Längsnut 32 zur Aufnahme der Tragschale 22, wobei federnde Seitenstege 33 an den Längsrändern der Längsnut 32 vorgesehen sind, die nach dem Aufdrücken der Deckschale 23 hinter der Tragschale 22 einrasten.

Die Führungshülse 28 besteht aus vier parallel zueinander verlaufenden Glasstäbchen 34, die miteinander fest verbunden sind und die zwischen sich einen sternförmigen Führungskanal 35 bilden, in welchen die Enden der Glasfasern 25, 26 eingeschoben werden. Die Glasstäbchen 34 sind unter einem stumpfen Winkel α gegeneinander gerichtetet und bilden den entsprechend unter dem stumpfen Winkel α verlaufenden Führungskanal 35, welcher in seinem Längsmittelbereich 36 einen gerade Abschnitt aufweist, in welchem die senkrecht zur Längsachse der Glasfasern 25, 25 geschnittenen Stirnflächen der Glasfasern 25, 26 planparallel aneinanderstoßen. Die Trag- und Deckschale 22, 23, welche die Führungshülse 28 aus den Glasstäbchen 34 aufnehmen, bestehen aus Kunststoff.

Wie es insbesondere in Fig. 5 dargestellt ist, verlaufen die vor und hinter der Aufnahmenut 27 und dem Längssteg 29 angeordneten Führungsnuten 30, 31 für die Lichtwellenleiter 25, 26 kurvenförmig in Längsrichtung des Verbindungselementes 21, wobei die Kurvenform derart gewählt ist, daß die aus dem Führungskanal 35 der Führungshülse 28 austretenden Lichtwellenleiter 25, 26 bruchsicher unter einem großen Krümmungsradius geführt und anschließend zentrisch aus dem Verbindungselement 21 austreten können.

Die Lichtwellenleiter 25, 26 sind mit einer isolierenden Ummantelung 44 versehen, die innerhalb der kurvenförmigen Führungsnuten 30, 31 abgefangen ist. Im Bereich des Führungskanales 35 der Führungshülse 28 ist die Ummantelung 44 ab dem Bereich 37 im Längsmittelbereich 36 des Verbindungselementes 21 entfernt.

Die Fig. 5 zeigt, daß der Längssteg 29 innerhalb der Deckschale 23 sich nur über den zentralen Längsmittelbereich 36 der Führungshülse 28 erstreckt, wohingegen die Deckschale 23 für die Endbereiche der Führungshülse 28 Aufnahmeöffnungen 38 aufweist, die sich an beiden Enden des Längssteges 29 erstrecken. Die Fig. 6 zeigt in der Draufsicht die Ausbildung der Führungsnut 31 innerhalb der Trag-schale 22, wobei die Führungsnut 31 V-förmig ausgebildet ist. Die Fig. 7 zeigt die Einspannung der Führungshülse 28 in der Aufnahmenut 32 der Tragschale 22 mittels des Längssteges 29 der Deckschale 23 und die Verrastung der Tragschale 22 innerhalb der Deckschale 23 mittels der federnden Seitenstege 33, die hinter Abschrägungen 39 der Tragschale 22 greifen. Die Fig. 8 zeigt den massiven, im wesentlichen rechteckigen Querschnitt der Tragschale 22 im Bereich der kurvenförmigen Führungsnuten 30, 31.

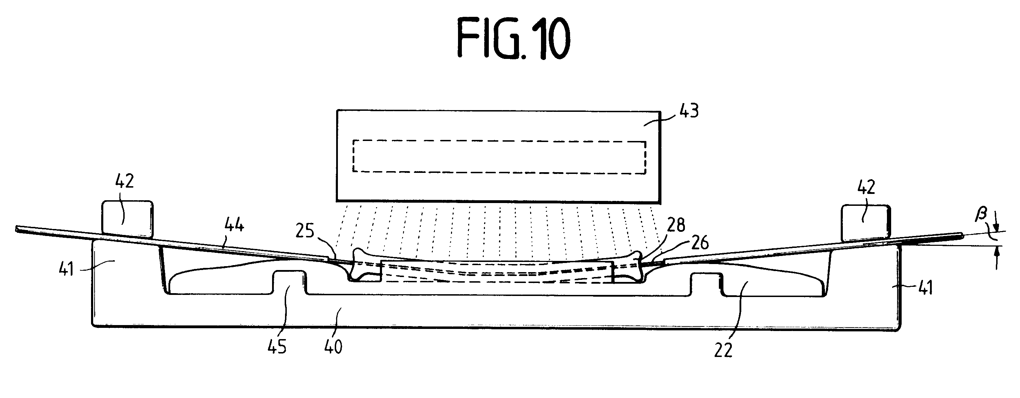

In der Fig. 10 ist eine Montageschiene 40 dargestellt, in welcher die Tragschale 22 zwischen endseitigen Führungswänden 41 und seitlichen Laschen 45 aufgenommen ist. In der Tragschale 22 befindet sich bereits die Führungshülse 28. Die Oberseiten der Führungswände 41 sind unter einem Winkel β von 5 Grad abgeschrägt und mit Haltefingern 42 versehen. Zwischen den Oberseiten der Führungswände 41 und den Haltefingern 42 hindurch werden die Lichtwellenleiter 25, 26 unter dem Winkel β von 5 Grad in die Führungshülse 28 eingeführt und dort mittels eines unter dem UV-Licht einer Lampe 43 aushärtbarem Klebstoff miteinander verklebt, wobei die Stirseiten planparallel zueinander liegen. Nach dem Aushärten wird die Tragschale 22 aus der Montageschiene 40 herausgenommen. Die Lichtwellenleiter 25, 26 werden in die kurvenförmigen Führungsnuten 31 der Tragschale 22 eingelegt. Anschließend wird die Deckschale 23 aufgerastet, woraufhin das Verbindungselement 21 fertigmontiert ist.

## Patentansprüche

1. Verbindungselement für Lichtwellenleiter (LWL), insbesondere Glasfasern, aus einer Tragschale (2) und aus einer mit dieser verbindbaren Deckschale (3), mit einem zwischen Tragschale (2) und Deckschale (3) gebildeten Führungskanal (4) für die Lichtwellenleiter (5,6),
**dadurch gekennzeichnet,**
daß die Deckschale (3) eine durchgehende Längsnut (7) zur Aufnahme der Tragschale (2) aufweist, daß die freien Längskanten der Längsnut (7) federnde Seitenstege (8) zum Einrasten hinter der in die Längsnut (7) eingedrückten Tragschale (2) aufweisen,
daß der Führungskanal (4) für die Lichtwellenleiter (5,6) im Bereich der aneinandergedrückten Innenflächen (9,10) von Trag- und Deckschale (2,3) aus in diesen ausgebildeten Führungsnuten (11,12) gebildet ist und daß die Führungsnuten (11,12) für die Lichtwellenleiter (5,6) im Längsmittelbereich (13) von Trag- und Deckschale (2,3) gerade und in beiden Endbereichen (14) kurvenförmig ausgebildet sind.

2. Verbindungselement nach Anspruch 1,
**dadurch gekennzeichnet,**
daß die Führungsnuten (11,12) für die Lichtwellenleiter (5,6) mit Metall, insbesondere Chrom, beschichtet sind

3. Verbindungselement nach einem der Ansprüche 1 und 2,
**dadurch gekennzeichnet,**
daß im Längsmittelbereich (13) der Deckschale (3) eine mittels eines Stopfens (16) verschließbare Siegelöffnung (15) vorgesehen ist.

4. Verbindungselement für Lichtwellenleiter (LWL),
insbesondere Glasfasern, aus einer Tragschale (22) und aus einer mit dieser verbindbaren Deckschale (23), mit einem zwischen Tragschale (22) und Deckschale (23) gebildeten Führungskanal (24) für die Lichtwellenleiter (25,26),
**dadurch gekennzeichnet,**
daß die Deckschale (23) eine durchgehende Längsnut (32) zur Aufnahme der Tragschale (22) aufweist, daß die freien Längskanten der Längsnut (32) federnde Seitenstege (33) zum Einrasten hinter der in die Längsnut (32) eingedrückten Tragschale (22) aufweisen, daß im Längsmittelbereich (36) die Tragschale (22) eine Aufnahmenut (27) mit einer Lichtwellenleiter-Führungshülse (28) und die Deckschale (23) einen die Lichtwellenleiter-Führungshülse (28) in der Aufnahmenut (27) haltenden Längssteg aufweist, daß die Lichtwellenleiter-Führungshülse (28) aus Glasstäbchen (34) besteht, die einen Führungskanal (35) bilden, in welchem die Enden der Lichtwellenleiter (25,26) eingeschoben sind und daß die aus der Lichtwellenleiter-Führungshülse (28) austretenden Lichtwellenleiter (25,26) vor und hinter der Aufnahmenut (27) in gegeneinander gerichteten Führungsnuten (30,31) geführt sind.

5. Verbindungselement nach Anspruch 4,
**dadurch gekennzeichnet,**
daß eine Montageschiene (40) zur Aufnahme der Tragschale (22) zwischen endseitigen Führungswänden (41) für die in die Führungshülse (28) einzuführenden Glasfasern (25,26) vorgesehen ist, wobei die Oberseiten der endständigen Führungswände (41) unter einem Montagewinkeel (β) nach innen geneigt ausgebildet und mit Haltefingern (42) für die Glasfasern (25,26) versehen sind.

## Claims

1. A connection element for light guides, in particular glass fibres, comprising a support pan and a cover pan to be connected therewith and comprising a guide channel for the light guides, characterized by that the cover pan (3) includes a longitudinal groove (7) extending over the full length thereof for receiving the support pan (2), that the free longitudinal edges of the longitudinal groove (7) include resilient side webs (8) for latching behind the support pan (2) pressed into the longitudinal groove (7), that the guide channel (4) for the light guides (5, 6) is formed, in the area of the pressed-together inner surfaces (9, 10) of support and cover pans (2, 3), of guide grooves (11, 12) provided therein, and that the guide grooves (11, 12) for the light guides (5, 6) are formed in a straight shape in the longitudinal centre area (13) of support and cover pans (2, 3), and in a curved shape in both end areas (14).

2. A connection element according to claim 1, characterized by that the guide grooves (11, 12) for the light guides (5, 6) are coated with metal, in particular chromium.

3. A connection element according to one of claims 1 and 2, characterized by that in the longitudinal centre area (13) of the cover pan (3) is provided a sealing opening (15) to be closed by means of a plug (16).

4. A connection element for light guides, comprising a support pan (22) and a cover pan (23) to be connected therewith and comprising a guide channel (24) for the light guides (25, 26) formed between support pan (22) and cover pan (23), characterized by that the cover pan (23) includes a longitudinal groove (32) extending over the full length thereof for receiving the support pan (22), that the free longitudinal edges of the longitudinal groove (32) include resilient side webs (33) for latching behind the support pan (22) pressed into the longitudinal groove (32), that in the longitudinal centre area (36), the support pan (22) comprises a receiving groove (27) including a guide sleeve (28) for the light guides and the support pan (23) comprises a longitudinal web holding the guide sleeve (28) for the light guides in the receiving groove (27), that the guide sleeve (28) for the light guides is composed of little glass rods (34) forming a guide channel (35), into which the free ends of the light guides (25, 26) are inserted, and that the light guides (25, 26) leaving the guide sleeve (28) for the light guides are conducted, before and behind the receiving groove (27), in opposedly directed guide grooves (30, 31).

5. A connection element according to claim 4, characterized by that a mounting rail (40) for receiving the support pan (22) between end-side guide walls (41) for the glass fibers (25, 26) to be inserted into the guide bearing (28) is provided, the upper sides of said end-side guide walls (41) being inwardly inclined at a mounting angle (β), and being provided with retaining fingers (42) for the glass fibers (25, 26).

## Revendications

1. Elément de connexion pour guides d'ondes lumineuses (LWL), essentiellement en fibres de verre, consistant en une coque support (2) et une coque de recouvrement (3) pouvant être reliée avec la première, avec un canal de guidage (4) formé entre la coque support (2) et la coque de recouvrement (3) pour les guides d'ondes lumineuses (5,6),
**caractérisé en ce que**
la coque de recouvrement (3) présente une rainure longitudinale continue (7) pour la réception de la coque support (2), que les bords longitudinaux libres de la rainure longitudinale (7) présentent des barrettes latérales élastiques (8) pour l'enclenchement derrière la coque support (2) enfoncée dans la rainure longitudinale (7), que le canal de guidage (4) pour les guides d'ondes lumineuses (5,6) est formé dans la zone des faces intérieures (9,10) de la coque support (2) et de la coque de recouvrement (3) assemblées par des rainures de guidage (11,12) réalisées dans ces dernières et que les rainures de guidage (11, 12) pour les guides d'ondes lumineuses (5,6) sont rectilignes dans la zone longitudinale médiane (13) de la coque support (2) et de la coque de recouvrement (3) et en forme de courbe dans les deux zones d'extrémité (14).

2. Elément de connexion selon la revendication 1,
**caractérisé en ce que**
les rainures de guidage (11,12) pour les guides d'ondes lumineuses (5,6) sont revêtues de métal, essentiellement de chrome.

3. Elément de connexion selon l'une des revendications 1 et 2,
**caractérisé en ce que**
dans la zone longitudinale médiane (13) de la coque de recouvrement (3) est prévue une ouverture de scellement (15) obturable moyennant un bouchon (16).

4. Elément de connexion pour guides d'ondes lumineuses (LWL), essentiellement en fibres de verre, consistant en une coque support (22) et une coque de recouvrement (23) pouvant être reliée avec la première, avec un canal de guidage (24) formé entre la coque support (22) et la coque de recouvrement (23) pour les guides d'ondes lumineuses (25, 26),
**caractérisé en ce que**
la coque de recouvrement (23) présente une rainure longitudinale continue (32) pour la réception de la coque support (22), que les bords longitudinaux libres de la rainure longitudinale (32) présentent des barrettes latérales élastiques (33) pour l'enclenchement derrière la coque support (22) enfoncée dans la rainure longitudinale (32), que dans la zone longitudinale médiane (36) la coque support (22) présente une rainure de réception (27) avec une douille de guidage (28) des guides d'ondes lumineuses et la coque de recouvrement (23) une barrette longitudinale maintenant la douille de guidage des guides d'ondes lumineuses (28) dans la rainure de réception (27), que la douille de guidage des guides d'ondes lumineuses (28) consistent en tiges de verre (34) formant un canal de guidage (35) dans lequel les extrémités des guides d'ondes lumineuses (25, 26) sont introduites et que les guides d'ondes lumineuses (25, 26) sortant de la douille de guidage des guides d'ondes lumineuses (28) sont guidés devant et derrière la rainure de réception (27) dans des rainures de guidage (30,31) à direction opposée.

5. Elément de connexion selon la revendication 4,
**caractérisé en ce que**
un rail de montage (40) pour la réception de la coque support (22) est prévu entre des parois de guidage (41) sur les extrémités pour les fibres de verre (25, 26) à introduire dans la douille de guidage (28), les faces supérieures des parois de guidage (41) sur les extrémités étant inclinées vers l'intérieur sous un angle de montage (β) et munies de doigts de retenue (42) pour les fibres de verres (25, 26).
